# EUROPEAN PATENT APPLICATION

(11) **EP 4 768 710 A1**
(43) Date of publication of application: **01.07.2026**
(21) Application number: 23958015.2
(22) Date of filing: 10.11.2023
(51) Int. Cl.: F03D 1/06

(54) **WIND TURBINE BLADE AND RAPID MAINTENANCE METHOD FOR WIND TURBINE BLADE**

(71) Applicant: Envision Energy Co., Ltd., Wuxi, Jiangsu 214400 (CN)
(72) Inventor: MA, Hao, Shanghai 200001 (CN); WU, Hansen, Shanghai 200001 (CN); ZHANG, Xiangyang, Shanghai 200001 (CN); AN, Junsong, Shanghai 200001 (CN); BIAN, Jiayan, Shanghai 200001 (CN); CHEN, Xiaodong, Shanghai 200001 (CN)
(74) Representative: Balder IP Law, S.L.
(86) International application number: PCT/CN2023/130870
(87) International publication number: WO 2025/097408

(57) **Abstract**

A wind turbine blade, comprising a first blade layer (11), an original inner core layer (10) and a second blade layer (12) which are stacked, a repair through hole (16) being formed in the second blade layer, a damage removal hole (15) being formed in the original inner core layer, and the damage removal hole being communicated with the repair through hole and extending to the inner surface of the first blade layer. A recovery structure layer (17) connected to the second blade layer is provided at the repair through hole. One or more repair core members (14) are provided in the damage removal hole. By means of continuous filling and curing of adhesives, the one or more repair core members are connected to each other, and the repair core members are connected to the first blade layer, so as to form a repaired inner core layer. During maintenance of the power wind turbine blade in a wind farm, the device can achieve short maintenance time, simple operation, stable maintenance quality, excellent structural performance after maintenance, and lower maintenance cost. Also disclosed is a rapid maintenance method for a wind turbine blade.

## Description

### TECHNICAL FIELD

Embodiments of the present disclosure pertain to the technical field of wind power generation, and relate to a wind turbine blade and a method for repairing.

### BACKGROUND

Wind power is a clean and pollution-free renewable energy source. It offers advantages such as wide distribution, flexible installation, and minimal impact on the ecological environment, which is why it has attracted increasing attention from countries around the world. Driven by the dual carbon policy in China, the wind power industry in China is developing rapidly, with a substantial annual increase in new deliveries. As is well known, the blade is a core component of a wind turbine. It is primarily made of composite materials and often incorporates a large number of sandwich structures. During transportation, installation, and operation of a blade, the sandwich structure of the blade is frequently subject to damage. In the past, when blades failed in the wind farm, the conventional method for repairing mostly involved infusion repair. However, due to the limitations of wind farm conditions, the conventional method for repairing requires manual mixing of resin, making it difficult to control the weighing ratio and achieve effective degassing. The resin infusion and curing process is time-consuming, making it challenging to ensure repair quality. Furthermore, to guarantee that the resin meets the required Tg (glass transition temperature), it is necessary to heat both the inner and outer surfaces of the blade simultaneously, which is difficult. In addition, the repaired area is prone to recurring failure during subsequent operation, leading to issues such as secondary repairs. Therefore, for the restoration of damaged blade sandwich structures, there is an urgent need for a method for repairing that offers short repair time, simple operation, reliable quality, and excellent structural performance after repair.

### SUMMARY

The objective of the present disclosure is to provide a wind turbine blade and a method for repairing, which features short repair time, simple operation, reliable quality, and excellent structural performance after repair.

The objective of the present disclosure can be achieved by the following technical solutions.

According to a first aspect of the present disclosure, some embodiments provide a wind turbine blade, including a first layer, a second layer, and an inner core layer between the first layer and the second layer, wherein a repair through-hole is formed in the second layer, and a damage removal hole is formed in the inner core layer, the damage removal hole communicating with the repair through-hole and extending to an inner surface of the first layer;
a restoration structure layer connected to the second layer is provided in the repair through-hole;
one or more repair core members are provided in the damage removal hole, wherein the one or more repair core members are connected to each other and to the first layer by a continuous adhesive filled and cured therebetween, thereby forming a repaired inner core layer.

Furthermore, the repair core member is obtained by pre-forming an integration of a reinforcing material and a core material, and
the restoration structure layer is obtained by wet/hand lay-up, vacuum infusing, or pre-forming.

Furthermore, the core material is one of balsa wood core material, polyvinyl chloride (PVC) foam core material, polyethylene terephthalate (PET) foam core material, polyurethane (PU) foam core material, polypropylene (PP) foam core material, polyamide (PA) foam core material, and paulownia wood core material.

Furthermore, the reinforcing material is a resin, or a composite material of resin and fiber; wherein the resin is selected from at least one of epoxy resin, polyurethane resin, unsaturated polyester resin, vinyl resin, and nylon resin, and the fiber is selected from at least one of glass fiber, carbon fiber, polyester fiber, aramid fiber, boron fiber, poly(p-phenylene benzobisoxazole) fiber, and basalt fiber.

Furthermore, the repair core member is prepared through one of immersion curing molding, wet/hand lay-up molding, prepreg, vacuum infusion molding, filament winding molding, injection molding, resin transfer molding (RTM), or pultrusion molding.

Furthermore, the repair core member has: a length of 10 mm to 1000 mm; a width of 10 mm to 200 mm; and a thickness that is 0.5 mm to 6 mm less than a thickness of the core in the inner core layer.

Furthermore, the adhesive is one of an epoxy-based adhesive, an acrylic-based adhesive, a polyurethane-based adhesive, and a silicone-based adhesive, and has a curing temperature of 15°C to 35°C.

Furthermore, the thickness of the cured adhesive ranges from 0.5 mm to 6 mm.

According to a second aspect of the present disclosure, some embodiments provide a method for repairing a wind turbine blade, wherein the wind turbine blade includes a first layer, a second layer, and an inner core layer between the first layer and the second layer, the method including:
S1: determining a damaged area of the inner core layer, sequentially removing portions of the second layer and the inner core layer corresponding to the damaged area, forming a repair through-hole in the second layer, and forming a damage removal hole in the inner core layer;
S2: selecting, based on a size of the damaged area and a type of material of the inner core layer, one or more repair core members with appropriate dimensions and reinforcement effects;
S3: applying an adhesive inside the damage removal hole, before arranging the one or more repair core members side by side on the adhesive, wherein the adhesive fills spaces between the one or more repair core members and the damage removal hole, between the one or more repair core members and an inner surface of the first layer, and between the one or more repair core members;
S4: wet/hand laying-up or bonding a prefabricated glass fiber reinforced plastic plate (FRP) on a surface of the one or more repair core members in the repair through-hole to obtain a restoration structure layer; and
S5: maintaining vacuum pressure, while curing the adhesive at room temperature or by surface heating.

According to a third aspect of the present disclosure, some embodiments provide a method for repairing a wind turbine blade, wherein the wind turbine blade includes a second layer, an inner core layer having a defect, and a first layer which are stacked in the aforelisted sequence, and the method includes:
S1: determining a damaged area of the inner core layer, sequentially removing portions of the second layer and the inner core layer corresponding to the damaged area, forming a repair through-hole in the second layer, and forming a damage removal hole in the inner core layer;
S2: selecting, based on a size of the damaged area and a type of material of the inner core layer, one or more repair core members with appropriate dimensions and reinforcement effects;
S3: applying an adhesive inside the damage removal hole, before arranging the one or more repair core members side by side on the adhesive, wherein the adhesive fills spaces between the one or more repair core members and the damage removal hole, between the one or more repair core members and an inner surface of the first layer, and between the one or more repair core members;
S4: maintaining vacuum pressure, while curing the adhesive at room temperature or by surface heating;
S5: wet/hand laying-up, vacuum infusing, or bonding a prefabricated glass fiber reinforced plastic plate on a surface of the one or more repair core members in the repair through-hole to obtain a restoration structure layer; and
S6: maintaining vacuum pressure, while curing the adhesive by surface heating.

Furthermore, in operation S4, curing the adhesive at room temperature includes: curing the adhesive in the damage removal hole at 15°C to 35°C for 1 hour under vacuum pressure; curing the adhesive by heating includes: curing the adhesive in the damage removal hole at 70°C to 80°C for 0.5 hour under vacuum pressure.

Compared with the prior art, the present disclosure has the following beneficial effects.

The embodiments of the present disclosure provide a wind turbine blade and a method for repairing, which can achieve short repair time, simple operation, reliable quality, and excellent structural performance after repair when repairing the sandwich structure of a wind turbine blade in a wind farm, eliminating potential rework risks. Compared with the conventional lay-up infusion method for repairing, the method according to the present disclosure can save 3 to 5 hours of repair time and reduce repair costs.

### BRIEF DESCRIPTION OF THE DRAWINGS

FIG. 1 is a schematic structural diagram of a wind turbine blade according to an embodiment of the present disclosure;
FIG. 2 is a schematic structural diagram of the blade after removing the damaged area in the inner core layer by using the method for repairing according to the present disclosure;
FIG. 3 is a schematic flow diagram of the method for repairing for a wind turbine blade according to the present disclosure;
FIG. 4 is a schematic diagram of different reinforcing structures of the repair core member according to the present disclosure;
FIG. 5 is a schematic diagram of the immersion molding reinforcement process for the repair core member according to the present disclosure;
FIG. 6 is a physical diagram of repairing a blade sandwich structure with reinforced balsa wood according to the present disclosure;
FIG. 7 is a schematic diagram of the vacuum infusion molding reinforcement process for the repair core member according to the present disclosure;
FIG. 8 is a physical diagram of repairing a blade sandwich structure with reinforced PET according to the present disclosure; and
FIG. 9 is a schematic diagram of the wet/hand lay-up molding reinforcement process for the repair core member according to the present disclosure.

Reference numerals in the accompanying drawings are listed as follows:
10 inner core layer, 11 first layer, 12 second layer, 13 repaired inner core layer, 14 repair core member, 15 damage removal hole, 16 repair through-hole, 17 restoration structure layer, 31 reinforcing material, 32 core material, 41 epoxy resin, 42 balsa wood, 43 peel ply, 51 PET core material, 52 biaxial 800g/m² glass fiber, 61 PVC core material, 62 hand lay-up biaxial 600g/m² glass fiber fabric.

### DETAILED DESCRIPTION OF THE EMBODIMENTS

The present disclosure will be described in detail below with reference to the accompanying drawings and specific embodiments.

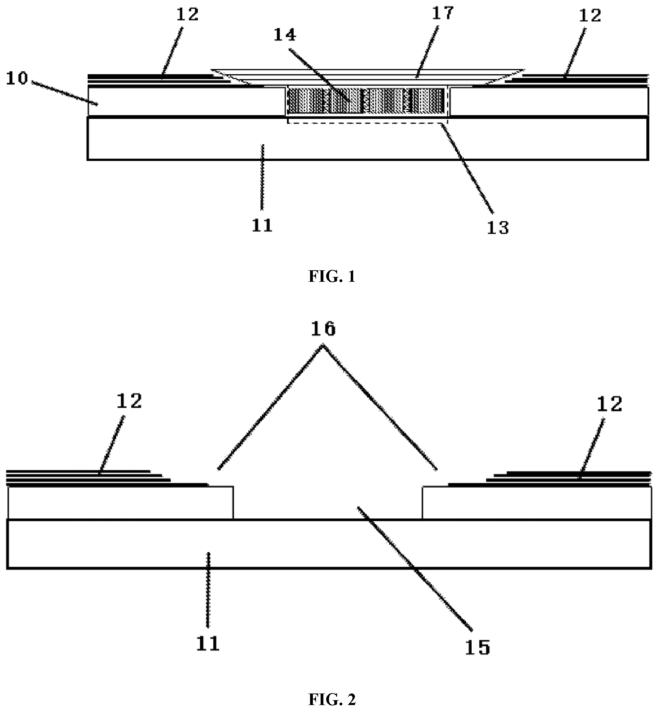

As shown in FIG. 1, a wind turbine blade includes a first layer 11, an inner core layer 10, and a second layer 12 which are stacked in the aforelisted sequence. A repair through-hole 16 is formed in the second layer 12, and a damage removal hole 15 is formed in the inner core layer 10. The damage removal hole 15 communicates with the repair through-hole 16 and extends to an inner surface of the first layer 11.

A restoration structure layer 17 connected to the second layer 12 is provided in the repair through-hole 16.

One or more repair core members 14 are provided in the damage removal hole 15. The one or more repair core members 14 are connected to each other and to the first layer 11 by a continuous adhesive filled and cured therebetween, thereby forming a repaired inner core layer.

The repair core member 14 is obtained by pre-forming an integrity of a reinforcing material 31 and a core material 32.

The restoration structure layer 17 is obtained by wet/hand lay-up, vacuum infusing, or pre-forming.

In some specific embodiments, the first layer 11 and the second layer 12 are glass fiber reinforced plastic laminates, which may be a composite material of glass fiber and epoxy resin or polyurethane, or may be a composite material of carbon fiber and epoxy resin or polyurethane.

In some specific embodiments, the damage removal hole 15 is a square groove.

The repair core members 14 are cuboid core members, and the length direction of the cuboid core members arranged in the damage removal hole 15 is consistent with the length direction of the blade.

In some embodiments, the cuboid core members have a solid structure without grooves, holes, or closed cells.

In some embodiments, the core material 32 is one of balsa wood core material, PVC foam core material, PET foam core material, PU foam core material, PP foam core material, PA foam core material, and paulownia wood core material.

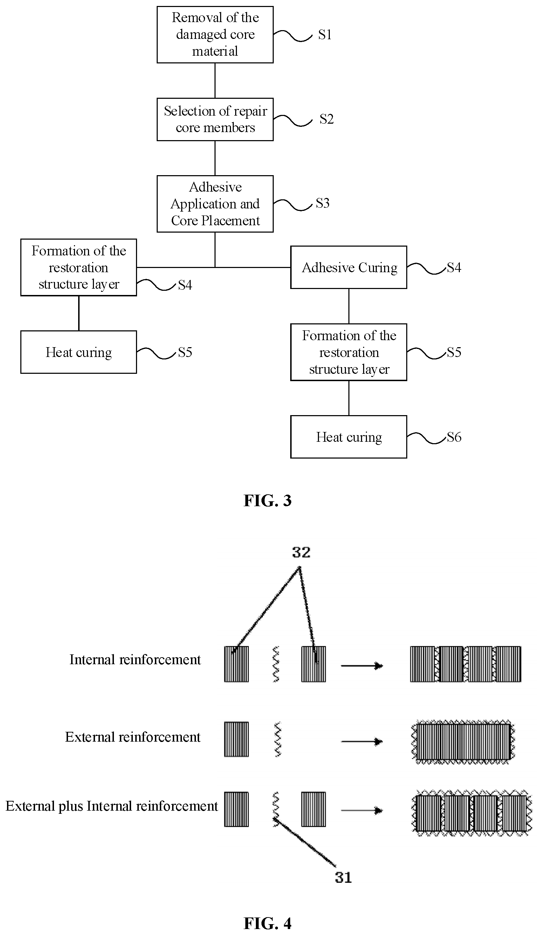

In some embodiments, as shown in FIG. 3, the methods of integrating the core material 32 and the reinforcing material 31 include internal reinforcement, external reinforcement, and external plus internal reinforcement.

In some embodiments, the reinforcing material 31 is a resin, or a composite material of resin and fiber; wherein the resin is selected from at least one of epoxy resin, polyurethane resin, unsaturated polyester resin, vinyl resin, and nylon resin, and the fiber is selected from at least one of glass fiber, carbon fiber, polyester fiber, aramid fiber, boron fiber, poly(p-phenylene benzobisoxazole) fiber, and basalt fiber.

In some embodiments, if the material of the repair core member 14 is reinforced PET, each repair core member 14 contains at least one strip of reinforced FRP, and during use, the length direction of the reinforced FRP is placed along the length direction of the blade.

In some embodiments, if the material of the repair core member 14 is reinforced PVC, each repair core member 14 contains at least one strip of reinforced FRP, and during use, the length direction of the reinforced FRP is placed along the length direction of the blade.

In some embodiments, the repair core member 14 is prepared through one of immersion curing molding, wet/hand lay-up molding, prepreg, vacuum infusion molding, filament winding molding, injection molding, resin transfer molding (RTM), or pultrusion molding.

In some embodiments, the repair core member 14 has: a length of 10 mm to 1000 mm, with a tolerance of ±10 mm; a width of 10mm to 200 mm, with a tolerance of ±5 mm; and a thickness that is 0.5 mm to 6 mm less than the thickness of the core material in the inner core layer 10, with a tolerance of ±0.5 mm.

In some embodiments, the adhesive is one of an epoxy-based adhesive, an acrylic-based adhesive, a polyurethane-based adhesive, and a silicone-based adhesive, and has a curing temperature of 15°C to 35°C.

In some optional embodiments, the thickness of the cured adhesive ranges from 0.5 mm to 6 mm.

Some embodiments provide a method for repairing a wind turbine blade, wherein the wind turbine blade includes a first layer 11, a second layer 12, and an inner core layer 10 between the first layer 11 and the second layer 12, and the method includes:
S1: determining a damaged area of the inner core layer, sequentially removing portions of the second layer 12 and the inner core layer 10 corresponding to the damaged area, forming a repair through-hole 16 in the second layer 12, and forming a damage removal hole 15 in the inner core layer 10, as shown in FIG. 2;
S2: selecting, based on a size of the damaged area and a type of material of the inner core layer, one or more repair core members with appropriate dimensions and reinforcement effects;
S3: applying an adhesive inside the damage removal hole 15, before arranging the one or more repair core members 14 side by side on the adhesive, wherein the adhesive fills spaces between the one or more repair core members 14 and the damage removal hole 15, between the one or more repair core members 14 and an inner surface of the first layer 11, and between the one or more repair core members 14;
S4: wet/hand laying-up or bonding a prefabricated glass fiber reinforced plastic plate on a surface of the one or more repair core members 14 in the repair through-hole 16 to obtain a restoration structure layer 17. Specifically, the structure and materials used for the restoration structure layer 17 are consistent with the structure and materials of the second layer 12.
S5: maintaining vacuum pressure, while curing the adhesive at room temperature or by surface heating.

Curing the adhesive at room temperature includes: curing the adhesive in the damage removal hole 15 and the repair through-hole 16 at 15°C to 35°C for 1 hour under vacuum pressure.

Curing the adhesive by heating includes: curing the adhesive in the damage removal hole 15 and the repair through-hole 16 at 70°C to 80°C for 0.5 hour under vacuum pressure.

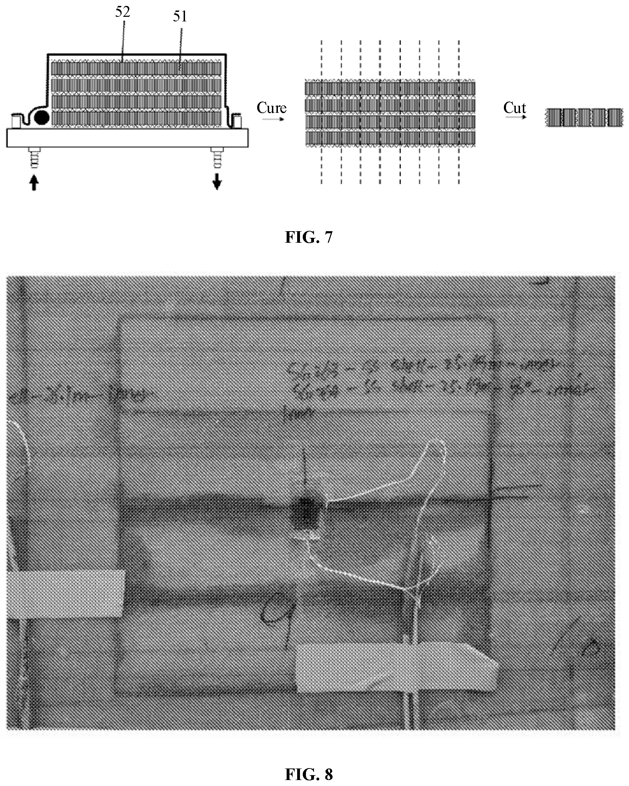

Some embodiments provide a method for repairing a wind turbine blade, wherein the wind turbine blade includes a first layer 11, a second layer 12, and an inner core layer 10 between the first layer 11 and the second layer 12, and the method includes:
S1: determining a damaged area of the inner core layer, sequentially removing portions of the second layer 12 and the inner core layer 10 corresponding to the damaged area, forming a repair through-hole 16 in the second layer 12, and forming a damage removal hole 15 in the inner core layer 10, as shown in FIG. 8;
S2: selecting, based on a size of the damaged area and a type of material of the inner core layer, one or more repair core members with appropriate dimensions and reinforcement effects;
S3: applying an adhesive inside the damage removal hole 15, before arranging the one or more repair core members 14 side by side on the adhesive, wherein the adhesive fills spaces between the one or more repair core members 14 and the damage removal hole 15, between the one or more repair core members 14 and an inner surface of the first layer 11, and between the one or more repair core members 14;
S4: maintaining vacuum pressure, while curing the adhesive at room temperature or by surface heating;
   Curing the adhesive at room temperature includes: curing the adhesive in the damage removal hole 15 at 15°C to 35°C for 1 hour under vacuum pressure. Curing the adhesive by heating includes: curing the adhesive in the damage removal hole 15 at 70°C to 80°C for 0.5 hour under vacuum pressure.
S5: wet/hand laying-up, vacuum infusing or bonding a prefabricated glass fiber reinforced plastic plate on a surface of the one or more repair core members 14 in the repair through-hole 16 to obtain a restoration structure layer 17. Specifically, the structure and materials used for the restoration structure layer 17 are consistent with the structure and materials of the second layer 12.
S6: maintaining vacuum pressure, while curing the adhesive by surface heating at 60°C to 70°C.

In some embodiments, the thickness of the cured adhesive ranges from 1 mm to 3 mm, and the size of a single adhesive void does not exceed 50 mm × 50 mm × 50 mm.

In some embodiments, the bonding quality of the repair core members can be inspected by means of visual inspection, tap testing, and/or low-frequency ultrasonic testing, among others.

In some embodiments, the second layer 12 can be restored by forming the restoration structure layer using wet/hand lay-up and vacuum infusion.

The following examples are implemented on the premise of the above technical solutions of the present disclosure, providing detailed implementations and specific operation processes. However, the protection scope of the present disclosure is not limited to the following examples.

It should be noted that similar reference numerals and letters indicate similar items in the accompanying drawings. Therefore, once an item is defined in one drawing, it does not need to be further defined or explained in subsequent drawings.

Some implementations of the present disclosure will be described in detail below with reference to the accompanying drawings. The following examples and features of the examples may be combined with each other without conflict.

### Embodiment 1

FIG. 3 shows a flow chart of a method for repairing a wind turbine blade adapted for use in a wind farm. The wind turbine blade includes a first layer 11, an inner core layer 10, and a second layer 12 which are stacked in the aforelisted sequence, wherein the inner core layer 10 has a structural defect.

The method for repairing includes two repair procedures. This embodiment adopts the first repair procedure:
S1, determining a damaged area of the inner core layer 10 and removing the damaged core material.
   The defect in the inner core layer has a size of 500 mm × 400 mm. The minimum damaged area is marked according to the defect size. A repair through-hole 16 is formed in the second layer 12 to remove the damaged core material, thereby forming a damage removal hole 15.
S2: selecting, based on a size of the damaged area and a type of material of the inner core layer, one or more repair core members with appropriate dimensions and reinforcement effects.

The inner core layer 10 in this damaged area is a balsa wood structural core material. Reinforced balsa wood is selected as the repair core member.

A single repair core member has a length of 490 mm to 500 mm, and a width of 95 mm to 100 mm.

A total of four repair core members are used.

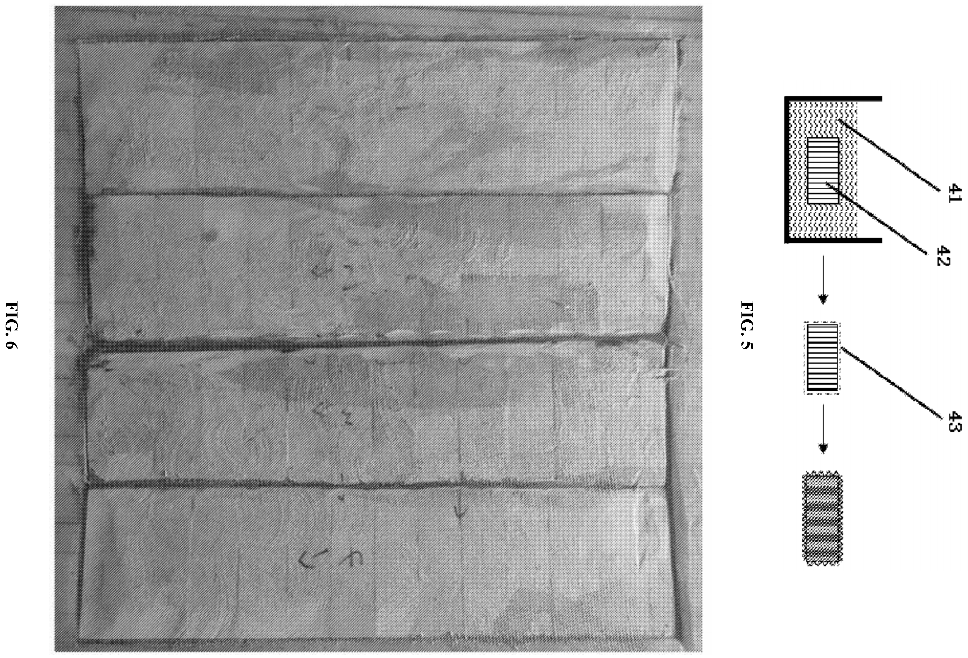

The balsa wood reinforcement method is shown in FIG. 5. Before use, the balsa wood 42 is immersed in epoxy resin 41 (DOW 180/185) to allow the surface to fully absorb the resin, and then covered with a peel ply 43 for curing.

S3: applying the adhesive before placing the repair core members.

The damage removal hole 15 is filled with an acrylic-based repair adhesive using a two-component glue gun and a static mixer. The adhesive thickness is 6 mm to 8 mm. The peel ply 43 is removed from the surface of the four reinforced balsa wood pieces, and the four reinforced balsa wood pieces are placed one by one on the adhesive surface. The reinforced balsa wood pieces are pressed down until they are level with the adjacent inner core layer 10, ensuring the adhesive fills the spaces between the repair core members 14 and the damage removal hole 15, between the repair core members 14 and the inner surface of the first layer 11, as well as the surface of the repair core members 14. Excess acrylic adhesive is removed.

S4: forming the restoration structure layer.

After filling with the reinforced balsa wood pieces, the acrylic adhesive is further applied on the surface to eliminate the step between core materials, and the open cavity is filled by laying-up resin.

Using the wet/hand lay-up method, a material identical to the second layer 12 is laid at the repair through-hole 16 to obtain the restoration structure layer 17.

Two layers of vacuum bagging are placed on the surface of the laid layers for vacuuming, and the surface is covered with an electric heating blanket.

S5: curing by heating.

The electric heating blanket is set to 60°C and the adhesive is cured for 3 hours to complete the repair of the damaged blade structure.

A physical diagram of the blade sandwich structure repaired with reinforced balsa wood is shown in FIG. 6.

### Embodiment 2

FIG. 3 shows a flow chart of a method for repairing a wind turbine blade adapted for use in a wind farm. The wind turbine blade includes a first layer 11, an inner core layer 10, and a second layer 12 which are stacked in the aforelisted sequence, wherein the inner core layer 10 has a structural defect.

The method for repairing includes two repair procedures. This embodiment adopts the second repair procedure:
S1, determining a damaged area of the inner core layer and removing the damaged core material.
   The defect in the inner core layer has a size of 400 mm × 400 mm. The minimum damaged area is marked according to the defect size. A repair through-hole 16 is formed in the second layer 12 to remove the damaged core material, thereby forming a damage removal hole 15.
S2: selecting, based on a size of the damaged area and a type of material of the inner core layer, one or more repair core members with appropriate dimensions and reinforcement effects.

The inner core layer 10 in this damaged area is a PET structural core material. Reinforced PET is selected as the repair core member 14.

A single repair core member has a length of 390 mm to 400 mm, and a width of 95 mm to 100 mm.

A total of four repair core members are used.

The PET reinforcement method is shown in FIG. 7. Before use, the PET foam 51 and biaxial 800g/m² glass fiber 52 are stacked in layers, covered with a peel ply on the surface, and then subjected to vacuum infusion molding to impregnate the biaxial 800g/m² glass fiber 52 and PET foam 51, followed by heating for curing. Before use, the reinforced PET is cut into the required dimensions, ensuring that each individual repair core member contains at least one strip of biaxial 800g/m² reinforced FRP.

S3: applying the adhesive before placing the repair core members.

The damage removal hole 15 is filled with a polyurethane-based repair adhesive using a two-component glue gun and a static mixer. The adhesive thickness is 6 mm to 8 mm. The peel ply 43 is removed from the surface of the four reinforced PET pieces, and the four reinforced PET pieces are placed one by one on the adhesive surface. The reinforced PET pieces are pressed down until they are level with the adjacent inner core layer 10, ensuring the adhesive fills the spaces between the reinforced PET pieces and the damage removal hole 15, and between the reinforced PET pieces and the inner surface of the first layer 11. Excess acrylic adhesive is removed.

S4: Curing the filled adhesive.

After filling with the reinforced PET pieces, a layer of vacuum bagging is laid at the repair through-hole 16 for compaction.

The curing is performed at 15°C for 1 hour; or the surface is covered with an electric heating blanket, and the adhesive is cured by heating at 70°C for 0.5 hours.

S5: forming the restoration structure layer.

After removing the vacuum bagging, the step between core materials is removed by polishing, and the open cavity is filled by laying-up resin.

The second blade layer 12 is restored using dry glass fiber lay-up and vacuum infusion.

Two layers of vacuum bagging are placed on the surface of the laid layers for vacuuming, and the surface is covered with an electric heating blanket.

S6: curing by heating.

The electric heating blanket is set to 70°C and the adhesive is cured for 5 hours.

A physical diagram of the blade sandwich structure repaired with reinforced PET is shown in FIG. 8.

### Embodiment 3

FIG. 3 shows a flow chart of a method for repairing for a wind turbine blade adapted for use in a wind farm. The wind turbine blade includes a first layer 11, an inner core layer 10, and a second layer 12 which are stacked in the aforelisted sequence, wherein the inner core layer 10 has a structural defect.

The method for repairing includes two repair procedures. This embodiment adopts the first repair procedure:
S1, determining a damaged area of the inner core layer 10 and removing the damaged core material.
   The defect in the inner core layer has a size of 1000 mm × 500 mm. The minimum damaged area is marked according to the defect size. A repair through-hole 16 is formed in the second layer 12 to remove the damaged core material, thereby forming a damage removal hole 15.
S2: selecting, based on a size of the damaged area and a type of material of the inner core layer, one or more repair core members with appropriate dimensions and reinforcement effects.

The inner core layer 10 in this damaged area is a PVC structural core material. Reinforced PVC is selected as the repair core member 14.

A single repair core member has a length of 990 mm to 1000 mm, and a width of 95 mm to 100 mm.

A total of five repair core members are used.

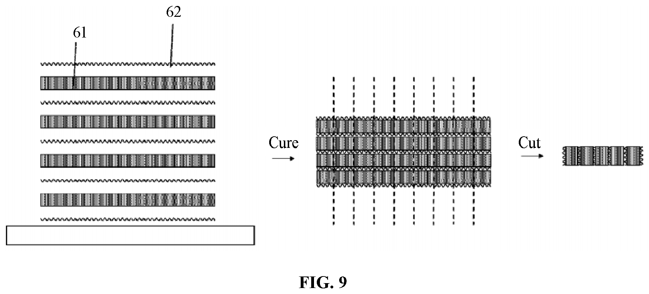

The PVC reinforcement method is shown in FIG. 9. Before use, the biaxial 600g/m² glass fiber fabric 62 is impregnated with epoxy resin 41 (DOW 180/185) to ensure the surface fully absorbs the resin. The PVC core material 61 is placed onto the epoxy resin-saturated biaxial 600g/m² glass fiber fabric 62 to be stacked sequentially, and the surface is covered with a peel ply 43 for curing. Before use, the reinforced PVC is cut into the required dimensions, ensuring that each individual repair core member contains at least one strip of biaxial 600g/m² reinforced FRP.

S3: applying the adhesive before placing the repair core members.

The damage removal hole 15 is filled with an epoxy-based repair adhesive using a two-component glue gun and a static mixer. The adhesive thickness is 6 mm to 8 mm. The peel ply is removed from the surface of the four reinforced PVC pieces, and the four reinforced PVC pieces are placed one by one on the adhesive surface. The reinforced PVC pieces are pressed down until they are level with the adjacent inner core layer 10, ensuring the adhesive fills the spaces between the repair core members 14 and the damage removal hole 15, between the repair core members 14 and the inner surface of the first layer 11, as well as the surface of the repair core members 14. Excess epoxy adhesive is removed.

S4: forming the restoration structure layer.

After filling with the reinforced PVC, the epoxy adhesive is applied over the entire surface, and also applied at the repair through-hole. A pre-fabricated material identical to the second blade layer 12 is placed at the repair through-hole 16 to obtain the restoration structure layer 17.

A layer of vacuum bagging is placed on the surface of the restoration structure layer for compaction.

S5: curing by heating.

The curing is performed at 35°C for 1 hour; or the surface is covered with an electric heating blanket, and the adhesive is cured by heating at 70°C for 0.5 hours.

In summary, the present disclosure proposes a wind turbine blade and a method for repairing a wind turbine blade. It utilizes a two-component adhesive curable at room temperature and pre-fabricated reinforced repair core members to quickly complete the adhesive bonding repair of damaged areas. This method overcomes the challenges posed by harsh wind farm conditions, achieving short repair time, simple operation, reliable repair quality, and excellent structural performance after repair for wind turbine blades, while also reducing repair costs.

The foregoing description of the embodiments is provided to enable any person skilled in the art to understand and use the invention. It will be readily apparent to those skilled in the art that various modifications to these embodiments can be made, and the general principles described herein may be applied to other embodiments without inventive effort. Therefore, the present invention is not limited to the above-described embodiments. Any improvements and modifications made by those skilled in the art based on the disclosure of the present invention without departing from the scope thereof shall fall within the protection scope of the present invention.

## Claims

1. A wind turbine blade, comprising a first layer (11), a second layer (12), and an inner core layer (10) between the first layer (11) and the second layer (12), wherein a repair through-hole (16) is formed in the second layer (12), and a damage removal hole (15) is formed in the inner core layer (10), the damage removal hole (15) communicating with the repair through-hole (16) and extending to an inner surface of the first layer (11); wherein a restoration structure layer (17) connected to the second layer (12) is provided in the repair through-hole (16); and one or more repair core members (14) are provided in the damage removal hole (15), wherein the one or more repair core members (14) are connected to each other and to the first layer (11) by a continuous adhesive filled and cured therebetween, thereby forming a repaired inner core layer (13).

2. The wind turbine blade according to claim 1, wherein the one or more each repair core members (14) are obtained by pre-forming an integrity of a reinforcing material (31) and a core material (32); and the restoration structure layer (17) is obtained by wet/hand lay-up, vacuum infusing, or pre-forming.

3. The wind turbine blade according to claim 2, wherein the core material is one of balsa wood core material, polyvinyl chloride (PVC) foam core material, polyethylene terephthalate (PET) foam core material, polyurethane (PU) foam core material, polypropylene (PP) foam core material, polyamide (PA) foam core material, and paulownia wood core material.

4. The wind turbine blade according to claim 2, wherein the reinforcing material is a resin, or a composite material of resin and fiber; wherein the resin is selected from at least one of epoxy resin, polyurethane resin, unsaturated polyester resin, vinyl resin, and nylon resin, and the fiber is selected from at least one of glass fiber, carbon fiber, polyester fiber, aramid fiber, boron fiber, poly(p-phenylene benzobisoxazole) fiber, and basalt fiber.

5. The wind turbine blade according to claim 1, wherein the one or more repair core members (14) are prepared through one of immersion curing molding, wet/hand lay-up molding, prepreg, vacuum infusion molding, filament winding molding, injection molding, resin transfer molding (RTM), and pultrusion molding.

6. The wind turbine blade according to claim 1, wherein each repair core member (14) has: a length of 10 mm to 1000 mm; a width of 10 mm to 200 mm; and a thickness that is 0.5 mm to 6 mm less than a thickness of the inner core layer (10).

7. The wind turbine blade according to claim 1, wherein the adhesive is one of an epoxy-based adhesive, an acrylic-based adhesive, a polyurethane-based adhesive, and a silicone-based adhesive, and has a curing temperature of 15°C to 35°C.

8. The wind turbine blade according to claim 7, wherein a thickness of the cured adhesive ranges from 0.5 mm to 6 mm.

9. A method for repairing a wind turbine blade, wherein the wind turbine blade includes a first layer, a second layer (12), and an inner core layer (10) between the first layer (11) and the second layer, the method for repairing comprising: determining a damaged area of the inner core layer, sequentially removing portions of the second layer (12) and the inner core layer (10) corresponding to the damaged area, forming a repair through-hole (16) in the second layer (12); forming a damage removal hole (15) in the inner core layer (10); applying an adhesive inside the damage removal hole (15) before arranging one or more repair core members (14) side by side on the adhesive, wherein the adhesive fills spaces between the one or more repair core members (14) and the damage removal hole (15), between the one or more repair core members (14) and an inner surface of the first layer (11), and between the one or more repair core members (14); wet/hand laying-up or bonding a prefabricated glass fiber reinforced plastic plate on a surface of the one or more repair core members (14) in the repair through-hole (16) to obtain a restoration structure layer (17); and maintaining vacuum pressure, while curing the adhesive at room temperature or by surface heating.

10. A method for repairing a wind turbine blade, wherein the wind turbine blade includes a first layer (11), a second layer (12), an inner core layer (10) between the first layer (11) and the second layer 12, the method comprising: determining a damaged area of the inner core layer, sequentially removing portions of the second layer (12) and the inner core layer (10) corresponding to the damaged area, forming a repair through-hole (16) in the second layer (12), and forming a damage removal hole (15) in the inner core layer (10); applying an adhesive inside the damage removal hole (15), before arranging one or more repair core members (14) side by side on the adhesive, wherein the adhesive fills spaces between the one or more repair core members (14) and the damage removal hole (15), between the one or more repair core members (14) and an inner surface of the first layer (11), and between the one or more repair core members (14); maintaining vacuum pressure, while curing the adhesive at room temperature or by surface heating; wet/hand laying-up, vacuum infusing or bonding a prefabricated glass fiber reinforced plastic plate on a surface of the one or more repair core members (14) in the repair through-hole (16) to obtain a restoration structure layer (17); and maintaining vacuum pressure, while curing the adhesive by surface heating.

11. The method according to claim 10, wherein curing the adhesive at room temperature includes: curing the adhesive in the damage removal hole (15) at 15°C to 35°C for 1 hour under vacuum pressure; curing the adhesive by heating includes: curing the adhesive in the damage removal hole (15) at 70°C to 80°C for 0.5 hour under vacuum pressure.
